# EUROPÄISCHE PATENTSCHRIFT

(11) **EP 1 363 018 B1**
(45) Veröffentlichungstag und Bekanntmachung des Hinweises auf die Patenterteilung: **01.03.2006**
(21) Anmeldenummer: 03008466.9
(22) Anmeldetag: 11.04.2003
(51) Int. Cl.: F03B 11/00, F04D 29/42

(54) **Schutzschicht für Strömungsmaschine**
Protective layer for fluid flow machine
Couche de protection pour turbomachine

(30) Priorität: 17.05.2002 DE 10222601
(43) Veröffentlichungstag der Anmeldung: 19.11.2003
(73) Patentinhaber: Voith Siemens Hydro Power Generation GmbH & Co. KG, 89522 Heidenheim (DE)
(72) Erfinder: Engelhardt, Michael, 73432 Aalen (DE); Horn Günther, 89522 Heidenheim (DE)
(74) Vertreter: Weitzel, Wolfgang

(56) Entgegenhaltungen:
- DE-A- 4 226 030
- US-A- 4 120 605
- US-A- 5 390 430
- HTTP://WWW.RAUMAUSSTATTUNG.DE/WEBEREI-TUFT EREI.HTML, [Online] XP002251004 Gefunden im Internet: <URL:http:/www.raumaustattung.de/999/342.h tml> [gefunden am 2003-08-12]

## Beschreibung

Die Erfindung betrifft Strömungsmaschinen wie Wasserturbinen, Wasserpumpen oder Pumpturbinen. Sie betrifft insbesondere jene Bauteile solcher Maschinen, welche wasserführende Flächen aufweisen. Dabei geht es in erster Linie um jene Bereiche solcher Bauteile, die während des Betriebes von Wasser angeströmt sind. Auf DE-A-42 26 030 wird verwiesen. Dieses Dokument enthält die Merkmale des Oberbegriffes von Anspruch 1.

Wie man weiß, kann das Wasser, das durch solche Maschinen hindurchströmt, Feststoffe wie Steine, Holz oder sonstiges Treibgut enthalten. Abhängig vom Standort der Maschine gelangen in der kalten Jahreszeit auch Eisbrocken in die Turbine. Alle diese Stoffe haben eine stark abrasive Wirkung. Deshalb sind die betreffenden Bauteile, zumindest deren gefährdete Bereiche, mit einem abrasionsminderndem Material beschichtet.

Eine bekannte Schutzschicht besteht aus Polyurethan (PU).

Bei normalen Verhältnissen, das heißt bei Flüssen, die mäßige bis mittlere Mengen von Treibgut mit sich führen, stellt die Schutzschicht einen sehr guten Schutz des damit beschichteten metallischen Bauteiles gegen Beschädigungen dar. Jedoch häufen sich in neuerer Zeit Fälle, in denen die Flüsse hohe Anteile an Schwerteilen wie Steine und Erden oder sonstiges Treibgut mit sich führen, und die aufgrund der örtlichen Gegebenheiten nicht entfernt werden können. Die Feststoffe treten dabei in großer Häufigkeit auf und haben ein hohes Gewicht. Deswegen und wegen der hohen Geschwindigkeit prallen auch diese Gegenstände mit hoher Energie auf die Schutzschicht auf. Dabei kommt es örtlich zu hohen Spannungsspitzen. Dies führt durch das häufige und wiederholte Auftreffen von Gegenständen zu einem örtlichen Abplatzen der Schutzschicht und schließlich auch zu einer Beschädigung der darunterliegenden metallischen Fläche. Die Oberfläche der Schutzschicht wird rau und uneben, teilsweise auch entfernt, was zu einer Beeinträchtigung der Stromführung führt und damit zumindest zu einer Verschlechterung des Wirkungsgrades, wenn nicht gar zu Folgeschäden an der Turbine oder anderer Bauteile.

Man hat schon daran gedacht, die gefährdeten Bereiche metallischer Bauteile von Turbinen oder dergleichen aus leicht austauschbaren Lagen extrem verschleißfester Materialien herzustellen, und diese Lagen von Zeit zu Zeit auszutauschen. Dies hat sich jedoch bei dem genannten Extremzustand von Flüssen als nicht praktikabel erwiesen.

Der Erfindung liegt die Aufgabe zugrunde, Maßnahmen zu treffen, mit welchen die wasserführenden Flächen von metallischen Bauteilen von Strömungsmaschinen, insbesondere von Wasserturbinen, Pumpturbinen oder Pumpen, derart geschützt werden können, dass der Schutz eine wesentlich längere Zeitdauer erhalten bleibt, als dies bisher der Fall war.

Die Erfinder haben dabei einen neuen Weg beschritten. Sie sind ausgegangen von der an sich bekannten und bewährten PU-Beschichtung. Dabei haben sie aber noch zusätzlich in diese Beschichtung Faserlagen eingebracht, und zwar aus einem aromatischen Polyamid (sogenanntes Aramid) oder aus einem Kunststoff gleicher Schlagzähigkeit.

Das genannte Material ist von entscheidender Bedeutung. Die Praxis hat gezeigt, dass es in idealer Weise geeignet ist, lokale Spannungsspitzen zu vermeiden, indem es die Aufprallenergie senkrecht zur Aufprallrichtung umleitet und ableitet, so dass örtliche Spannungsspitzen wesentlich geringere Werte erreichen. Die Schutzschicht mitsamt der Faserlage bleiben somit auf längere Zeiträume hinweg erhalten. Die zeitlichen Abstände zwischen zwei Reparaturvorgängen ist somit viel größer, als dies seither der Fall war.

Die genannten Faserlagen werden zweckmäßigerweise im Verbund aufgebracht, das heißt als Gewebe, Gewirk oder Gestrick. Dabei kommt eine Leinwandbindung in Betracht, aber auch eine Köper- oder Atlasbindung. Die Körper- und Leinwandbindungen haben sich im Labor als besonders günstig erwiesen.

Bei Aramid-Fasern sollte ein Fasermaterial mit einer besonders hohen Zugfestigkeit gewählt werden. Werte von zwischen 2500 bis 3000 MPa sind anzustreben, am besten von 2900 MPa. Der Zug-E-Modul sollte zwischen 100 und 150 GPa lieben, am besten in der Größenordnung von 130.

Die Fasern müssen völlig in das PU-Material eingebettet sein, so dass sie nicht über die wasserführende Außenfläche hinausragen.

In einem Querschnitt durch die Schutzschicht gesehen können auch mehrere Lagen übereinander angeordnet sein, somit beispielsweise zwei oder mehrere Lagen eines Gewebes.

Statt einer Polyurethan-Beschichtung kommen auch andere Beschichtungsmaterialien in Betracht, die dem Erosionsschutz dienen.

## Patentansprüche

1. Bauteil aus Metall für eine Wasserturbine oder eine andere Strömungsmaschine;
mit einer Schutzschicht, die auf Bereiche des Bauteiles aufgebracht ist und die wasserführende Flächen bildet; **gekennzeichnet durch** die folgenden Merkmale
mit wenigstens einer Faserlage, die in die Schutzschicht eingebettet ist;
das Material der Faserlage ist aus einem aromatischen Polyamid oder einem Kunststoff ähnlicher oder gleicher Schlagzähigkeit ausgewählt.

2. Bauteil nach Anspruch 1, **dadurch gekennzeichnet, dass** die Fasern aus Hochmodulmaterial bestehen.

3. Bauteil nach Anspruch 2, **dadurch gekennzeichnet, dass** die Zugfestigkeit der Fasern wenigstens 2500 MPa, und das Zug-E-Modul wenigstens 100 GPa beträgt.

4. Bauteil nach einem der Ansprüche 1 bis 3, **dadurch gekennzeichnet, dass** die Fasern in Form von Gelegen oder Geweben oder Gewirken oder Gestricken vorliegen.

5. Bauteil nach Anspruch 4, **dadurch gekennzeichnet, dass** die Fasern in Form einer Leinwandbindung oder einer Köperbindung oder einer Atlasbindung vorliegen.

6. Bauteil nach einem der Ansprüche 1 bis 5, **dadurch gekennzeichnet, dass**, in einem Querschnitt durch die Schutzschicht gesehen, mehrere Faserlagen vorgesehen sind.

7. Bauteil nach einem der Ansprüche 1 bis 6, **dadurch gekennzeichnet, dass** die Fasern nicht über die wasserberührten Flächen der Schutzschicht hinausragen.

8. Bauteil nach Anspruch 7, **dadurch gekennzeichnet, dass** die wasserberührten Flächen ausschließlich aus dem Material der Schutzschicht gebildet sind.

9. Bauteil nach einem der Ansprüche 1 bis 8, **dadurch gekennzeichnet, dass** die Schutzschicht aus Polyurethan besteht.

## Claims

1. A component made of metal for a water turbine or any other fluid flow engine, comprising a protective coating which is applied to sections of the component and forms the water-guiding surfaces, **characterized by** the following features:
with at least one fiber layer which is embedded in the protective layer, and the material of the fiber layer is chosen from an aromatic polyamide or a plastic material of a similar or the same impact strength.

2. A component according to claim 1, **characterized in that** the fibers consist of a high-modulus material.

3. A component according to claim 2, **characterized in that** the tensile strength of the fibers is at least 2500 MPa, and the modulus of elasticity in tension is at least 100 GPa.

4. A component according to one of the claims 1 to 3, **characterized in that** the fibers are present in the form of interlaid scrim or woven textiles or knitted fabrics.

5. A component according to claim 4, **characterized in that** the fibers are present in the form of a tabby weave or twill weave or atlas weave.

6. A component according to one of the claims 1 to 5, **characterized in that** several fiber layers are provided, as seen in a cross section through the protective layer.

7. A component according to one of the claims 1 to 6, **characterized in that** the fibers do not project beyond the water-contacting surfaces of the protective layer.

8. A component according to claim 7, **characterized in that** the water-contacting surfaces are formed exclusively by the material of the protective layer.

9. A component according to one of the claims 1 to 8, **characterized in that** the protective layer consists of polyurethane.

## Revendications

1. Composant en métal pour une turbine hydraulique ou une turbomachine ; avec une couche de protection qui est appliquée sur des parties du composant et forme des surfaces sur lesquelles s'écoule l'eau ;
**caractérisé par** les particularités suivantes :
avec au moins une couche de fibres noyées dans la couche de protection ; le matériau de la couche de fibres est choisi parmi un polyamide aromatique ou une matière plastique présentant une tenue au choc similaire ou identique.

2. Composant selon la revendication 1, **caractérisé en ce que** les fibres sont réalisées à partir d'un matériau ayant un module élevé.

3. Composant selon la revendication 2, **caractérisé en ce que** la résistance en traction des fibres est d'au moins 2 500 MPa et que le module d'élasticité en traction est d'au moins 100 GPa.

4. Composant selon l'une quelconque des revendications 1 à 3, **caractérisé en ce que** les fibres sont présentes sous forme de grilles ou de tissus tissés ou de tissus à mailles ou de tricots.

5. Composant selon la revendication 4, **caractérisé en ce que** les fibres sont présentes sous forme d'armure toile ou d'armure croisée ou d'armure satin.

6. Composant selon l'une quelconque des revendications 1 à 5, **caractérisé en ce que**, prise en coupe transversale, la couche de protection comporte plusieurs couches de fibres.

7. Composant selon l'une quelconque des revendications 1 à 6, **caractérisé en ce que** les fibres ne font pas saillie au-delà des surfaces de la couche de protection qui sont en contact avec l'eau.

8. Composant selon la revendication 7, **caractérisé en ce que** les surfaces en contact avec l'eau sont exclusivement réalisées à partir du matériau de la couche de protection.

9. Composant selon l'une quelconque des revendications 1 à 8, **caractérisé en ce que** la couche de protection est réalisée en polyuréthanne.
